# EUROPEAN PATENT SPECIFICATION

(11) **EP 1 290 521 B1**
(45) Date of publication and mention of the grant of the patent: **07.12.2005**
(21) Application number: 01917997.7
(22) Date of filing: 28.03.2001
(51) Int. Cl.: G05D 23/19

(54) **INTERFACE UNIT**
SCHNITTSTELLENEINHEIT
UNITE D'INTERFACE

(30) Priority: 30.03.2000 NL 1014792
(43) Date of publication of application: 12.03.2003
(73) Proprietor: Technische Universiteit Delft, 2628 BL Delft (NL)
(72) Inventor: KEYSON, David, Victor, 1188 GH Amstelveen (NL); FREUDENTHAL, Adinda, 3055 EH Rotterdam (NL); DE HOOGH, Marcus, Petrus, Andreas, Josef, 2645 JK Delfgauw (NL); DEKOVEN, Elyon, Avram, Micah, 1183 CB Amstelveen (NL)
(74) Representative: Van Breda, Jacobus
(86) International application number: PCT/NL2001/000257
(87) International publication number: WO 2001/079952

(56) References cited:
- WO-A-97/39392
- FR-A- 2 762 470
- US-A- 4 516 207
- US-A- 5 449 319

## Description

The invention relates to an interface unit comprising at least a display unit for communication with a user, which is designed for being coupled with a control unit for at least one or more parameters in a living or working environment, such as the temperature setting in a house, which control unit comprises a processor for receiving and processing data inputs and transmitting data outputs.

Such an interface unit is known, for example, in the form of the thermostatic device brought on the market by Honeywell, and by means of which the desired temperature range in a principal living space can be defined in a 24-hour pattern. By means of this it is possible to differentiate between the temperature range during the week and in the weekend.

Such an interface unit, which is designed for selecting for each room separately a desired temperature setting, is known from WO 97/39392 and from US-A-5 449 319, each read independently.

In the known interface the temperature setting for each room is coupled with, and depends on an adjustable pattern of the user's activities.

It is the object of the invention to optimize the known interface unit with respect to use and application possibilities such that the same is simpler to operate and provides more application possibilities.

To this end the interface unit in a first aspect of the invention is characterized in that in a first display the display unit gives an outline of the activities set for a pre-selectable part of a day, and that it shows a first adjusting member or members for setting, or adding to, or changing said activities. This makes it possible to realize user-friendly operability in a complex adjusting system comprising multi-adjustable parameters for each separate room, and being in addition dependent on the moment of the day that is defined by the activity relevant to that moment. In this way it is possible to save energy as well as to realize optimal living comfort. This will be referred to later.

In order to realize the function just mentioned, the display unit in a second display preferably gives an outline of the possible selectable rooms, the desired and the actual temperature for at least one selected room, and a second adjusting member for adjusting the desired temperature in the selected room. In this way the various parameters relating to the temperatures in the various rooms of the house are grouped appropriately and clearly, which makes operation especially simple. The latter holds true in particular if the adjusting member is shown on a touch screen, making it immediately operable.

This operation may be further optimized in the embodiment that is characterized in that the selection of an activity in the first display causes the second display pertaining to that selected activity to be retrieved in order to allow the adjustment of the desired temperatures.

As already mentioned above, it is preferred for the interface unit to offer various options to be chosen from the group comprising at least: energy saving, comfort optimization. It is remarked that FR-A-2 762 470 teaches the selection of said options in a control system for electrical heaters (convectors).

In a third aspect of the invention the interface unit is characterized in that, based on a selected option and subject to an observed pattern of activity of the user, the interface unit shows suggestions on the display unit for the adjustment of the settings or the activities, respectively. In this way a totally new method of influencing the living or working environment is created, in which the optimization of comfort or the energy consumption, respectively, can take place in an intelligent deliberation between the user and the interface unit according to the invention. In this way the user retains the possibility of making a specific adjustment to the various settings, so that the feeling of being master in his own living or working environment is not attacked. A simple way of operating is effectuated especially if the deliberation between system and user takes place via speech. In this respect it is remarked that voice-control for an air conditioner is disclosed in US-A-4,516,207.

In a first preferred embodiment it is desirable for the image displayed on the display unit to show which verbal instructions are currently available. In a second preferred embodiment, the interface unit itself (also) audibly reproduces the verbal instructions currently available.

In yet another aspect of the invention, the interface unit is characterized in that the same is designed to register the desired settings for each user separately, and in the event of conflicting settings from different users, to show them on the display unit to allow selection of the desired settings.

Although in the foregoing the invention is presented as an interface unit for controlling the temperature settings in a living or working environment, the application of the interface unit is not limited thereto, but may equally effectively be implemented for the control of other types of devices, such as the control of the lighting and/or alarm system. One thing and another may of course also be integrated in a single system.

Although the foregoing description provides the person skilled in the art with an explanation of the invention that is explicit and complete enough for him to reproduce it, one exemplary embodiment will be discussed below for further elucidation. This exemplary embodiment is to be understood not to limit the protective scope of the appended claims.

To aid the discussion of this exemplary embodiment a drawing is enclosed, comprising the figures 1 to 4.

Figure 1 shows the interface's display by a display unit relating to a main menu.

Figure 2 shows a display that may be shown on the display unit and which relates to a personal activity schedule of a user.

Figure 3 shows a display that is presented after selection of an activity shown in accordance with figure 2.

Figure 4 shows a display shown on the display unit for the changing or addition of activities of a user.

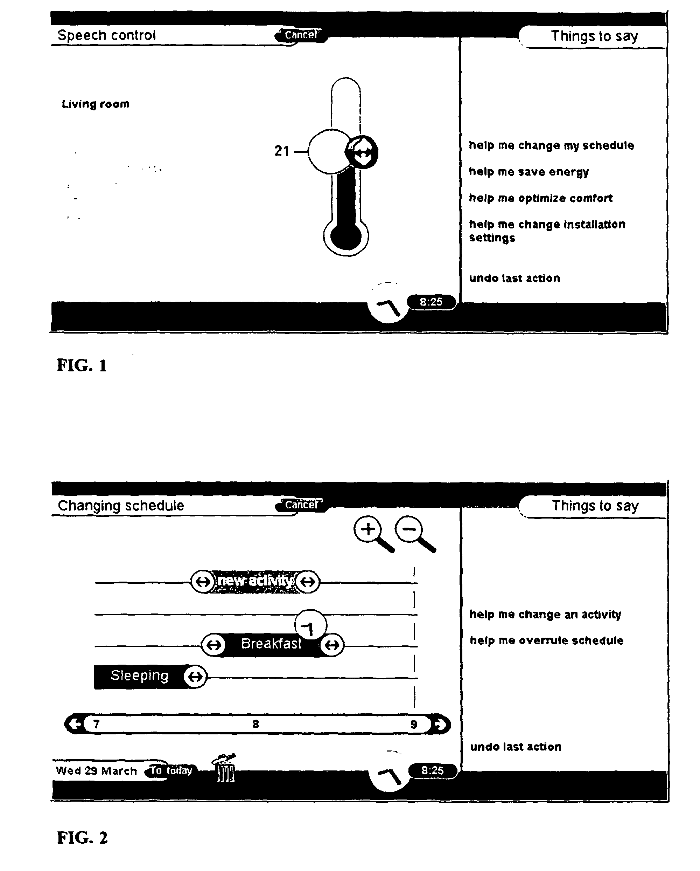

As a rule the temperature of the different rooms in a house can be selected within predetermined limits. To this end the user is able to change the respective settings. Figure 1, shows an exemplary main menu, in which on the left, the room options are mentioned; the actually selected room is printed in a rectangle. In the middle of the display the desired and actual temperature pertaining to the selected room is shown, together with the adjusting member in the form of an arrow pointing up and down with which the temperature setting can be changed. On the right of the display, various options are shown that a user may select, such as saving energy and optimizing comfort. In this display it is also possible to adjust the activity schedule via the interface unit.

Figure 2, shows the appropriate activity schedule of an individual user. These activities are presented on different bars, the starting point and end of each activity being controllable by means of operating icons, which are in themselves obvious. At the top right, slightly off centre in the display, two magnifying glasses are shown which are symbolic for the possibility of showing the entire activity schedule (by enlarging the times scale) or of showing only a part of the activity schedule (by reducing the time scale). In this first display, the bar showing the icon "new activity" is always displayed in order to continuously provide the possibility of adding activities.

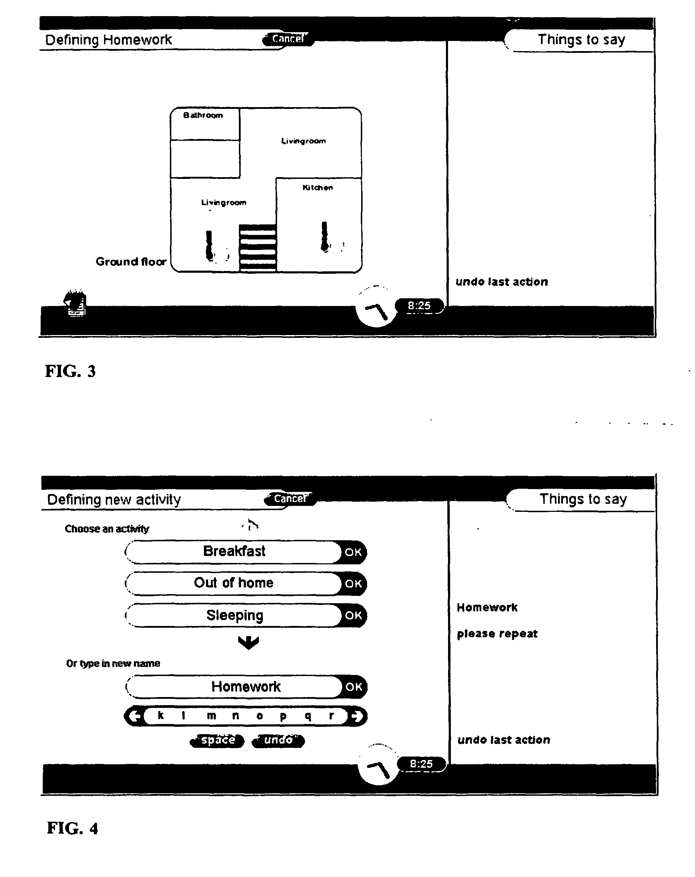

Figure 3 shows the display that appears when the activity represented in figure 2 by the icon "breakfast" is selected. In the present example the layout of all floors of the respective house can be displayed. In the present case the ground floor is selected. At the same time the temperature settings and the actual temperature of the various rooms are shown wherein the user whose activity has been selected, can adjust the respective settings.

Figure 4 finally, shows an example of a display that can be used in order to make it possible to define new activities, to change activities or to add activities.

When the option saving energy or optimizing comfort is selected as shown in figure 1, other functions become available. For example, by selecting the option saving energy, the interface unit is able to suggest changes in the activity schedule, based on an actually observed activity pattern, or on the presence of the user. To implement these suggestions, authorization or confirmation by the respective user is always required. The interface unit according to the invention provides the additional possibility to, by means of one single instruction, postpone the entire activity schedule relating to a particular day and relating to a particular user, for a predetermined time.

In the example shown, the input of instructions takes place by means of speech. In the figures 1 to 4, at the right, the possible relevant instructions that may be "understood" by the interface unit are shown on the display unit (see the part "Things to say"). These possible instructions are at the same time adjusted to the possibilities of that moment, pertaining to the display shown, and may preferably also be audibly reproduced by the interface unit.

If different users operate, and are authorized to operate the interface unit, the interface unit is preferably embodied such that the settings are registered separately for each user, and that in the event of conflicting settings, the display unit shows the conflicting settings on the display unit in order to allow the users to conclusively determine the desired settings.

## Claims

1. An interface unit comprising at least a display unit for communication with a user, which is designed for being coupled with a control unit for at least one or more parameters in a living or working environment, such as the temperature setting in rooms of a house, which control unit comprises a processor for receiving and processing data inputs and transmitting data outputs, which interface unit is designed for selecting for each room separately a desired temperature setting, wherein the temperature setting desired for each room is coupled with, and depends on an adjustable activities pattern of at least one user, **characterized in that** in a first display the display unit gives an outline of the activities set for a pre-selectable part of a day, and shows a first adjusting member or members for setting, or adding to, or changing said activities.

2. An interface unit according to claim 1, **characterized in that** the display unit in a second display preferably gives an outline of the possible selectable rooms, the desired and the actual temperature for at least one selected room, and a second adjusting member for adjusting the desired temperature in the selected room.

3. An interface unit according to claims 1 and 2, **characterized in that** the selection of an activity in the first display causes the second display pertaining to that selected activity to be retrieved in order to allow the adjustment of the desired temperatures.

4. An interface unit according to one of the preceding claims, **characterized in that** the interface unit offers various options to be chosen from the group comprising at least: energy saving, comfort optimization.

5. An interface unit according to claim 4, **characterized in that** based on a selected option and subject to an observed pattern of activity of the user, the interface unit shows suggestions on the display unit for the adjustment of the settings or the activities, respectively.

6. An interface unit according to one of the preceding claims, **characterized in that** the same is voice-controlled.

7. An interface unit according to claim 4, **characterized in that** the image displayed on the display unit shows which verbal instructions are currently available.

8. An interface unit according to claim 6 or 7, **characterized in that** the same audibly reproduces the verbal instructions currently available.

9. An interface unit according to one of the claims 1-8, **characterized in that** the interface unit is designed to register the desired settings for each user separately, and in the event of conflicting settings from different users, to show them on the display unit to allow selection of the desired settings.

## Patentansprüche

1. Schnittstelleneinheit mit mindestens einer Anzeigeeinheit zur Kommunikation mit einem Benutzer, die so ausgelegt ist, dass sie mit einer Kontrolleinheit für mindestens einen oder mehrere Parameter in einer Wohn- oder Arbeitsumgebung, wie beispielsweise die Temperatureinstellungen in den Zimmern eines Hauses, gekoppelt werden kann, wobei die Kontrolleinheit einen Prozessor zum Empfangen und Verarbeiten von Dateneingaben und Ausgeben von Datenausgaben enthält, die Schnittstelleneinheit so ausgelegt ist, dass in jedem Zimmer separat eine gewünschte Temperatureinstellung ausgewählt werden kann, und die für jedes Zimmer gewünschte Temperatureinstellung gekoppelt ist mit und abhängig ist von einem anpassbaren Aktivitätsschema von mindestens einem Benutzer, **dadurch gekennzeichnet, dass** die Anzeigeeinheit in einer ersten Anzeige einen Überblick über die Aktivitäten gibt, die für einen vorausgewählten Teil des Tages eingestellt wurden, und ein erstes Anpasselement oder -elemente zum Einstellen, Hinzufügen oder Verändern der Aktivitäten anzeigt.

2. Schnittstelleneinheit nach Anspruch 1, **dadurch gekennzeichnet, dass** die Anzeigeeinheit in einer zweiten Anzeige vorzugsweise einen Überblick über die möglichen auswählbaren Zimmer, die gewünschte und die tatsächliche Temperatur für mindestens ein ausgewähltes Zimmer, und ein zweites Anpasselement zum Anpassen der gewünschten Temperatur im ausgewählten Zimmer gibt.

3. Schnittstelleneinheit nach Anspruch 1 oder 2, **dadurch gekennzeichnet, dass** die Auswahl einer Aktivität in der ersten Anzeige verursacht, dass die zur ausgewählten Aktivität gehörige Anzeige aufgerufen wird, um ein Anpassen der gewünschten Temperaturen zu erlauben.

4. Schnittstelleneinheit nach einem der vorhergehenden Ansprüche, **dadurch gekennzeichnet, dass** die Schnittstelleneinheit verschiedene auswählbare Optionen aus der Gruppe bestehend aus mindestens Energiesparen und Komfortoptimierung anbietet.

5. Schnittstelleneinheit nach Anspruch 4, **dadurch gekennzeichnet, dass**, auf Basis auf einer ausgewählten Option und in Abhängigkeit von einem beobachteten Aktivitätsschema eines Benutzers, die Schnittstelleneinheit auf der Anzeigeeinheit Vorschläge für das Anpassen der Einstellungen bzw. der Aktivitäten anzeigt.

6. Schnittstelleneinheit nach einem der vorhergehenden Ansprüche, **dadurch gekennzeichnet, dass** selbige per Stimme kontrolliert werden kann.

7. Schnittstelleneinheit nach Anspruch 4, **dadurch gekennzeichnet, dass** das auf der Anzeigeeinheit angezeigte Bild anzeigt, welche verbalen Instruktionen gegenwärtig verfügbar sind.

8. Schnittstelleneinheit nach Anspruch 6 oder 7, **dadurch gekennzeichnet, dass** selbige die gegenwärtig verfügbaren verbalen Instruktionen hörbar wiedergibt.

9. Schnittstelleneinheit nach einem der Ansprüche 1 bis 8, **dadurch gekennzeichnet, dass** die Schnittstelleneinheit so ausgelegt ist, dass die gewünschten Einstellungen für jeden Benutzer separat erfasst werden können, und im Falle von widersprüchlichen Einstellungen unterschiedlicher Benutzer, diese auf der Anzeigeeinheit angezeigt werden können um eine Auswahl der gewünschten Einstellungen zu ermöglichen.

## Revendications

1. Unité d'interface comprenant au moins une unité d'affichage permettant de communiquer avec un utilisateur, qui est conçue pour être couplée à une unité de commande pour au moins un ou plusieurs paramètres dans un environnement privé ou professionnel, tels que le réglage de la température dans les pièces d'une maison, laquelle unité de commande comprend un processeur permettant de recevoir et de traiter des entrées de données et de transmettre des sorties de données, laquelle unité d'interface est conçue pour choisir, pour chaque pièce séparément, un réglage de température souhaitée, dans laquelle le réglage de la température souhaitée pour chaque pièce est couplé à et dépend d'une suite d'activités type ajustable d'au moins un utilisateur, **caractérisée en ce que** dans un premier écran, l'unité d'affichage donne un aperçu des activités définies pour un moment d'une journée choisi au préalable, et montre un premier élément d'ajustement ou des éléments d'ajustement permettant de régler, ajouter, ou modifier lesdites activités.

2. Unité d'interface selon la revendication 1, **caractérisée en ce que** l'unité d'affichage dans un second affichage donne de préférence un aperçu des pièces pouvant être choisies, de la température souhaitée et réelle pour au moins une pièce choisie, et un second élément d'ajustement permettant d'ajuster la température souhaitée dans la pièce choisie.

3. Unité d'interface selon les revendications 1 et 2, **caractérisée en ce que** le choix d'une activité dans le premier affichage entraîne le retour du second affichage concernant à cette activité choisie pour permettre l'ajustement des températures souhaitées.

4. Unité d'interface selon l'une des revendications précédentes, **caractérisée en ce que** l'unité d'interface propose diverses options à choisir dans le groupe comprenant au moins : l'économie d'énergie, l'optimisation du confort.

5. Unité d'interface selon la revendication 4, **caractérisée en ce que**, en se basant sur une option choisie et sujette à une suite d'activité type observée de l'utilisateur, l'unité d'interface montre des suggestions sur l'unité d'affichage pour ajuster des réglages ou des activités, respectivement.

6. Unité d'interface selon l'une des revendications précédentes, **caractérisée en ce que** cette même unité d'interface est commandée vocalement.

7. Unité d'interface selon la revendication 4, **caractérisée en ce que** l'image affichée sur l'unité d'affichage montre quelles instructions orales sont actuellement disponibles.

8. Unité d'interface selon la revendication 6 ou 7, **caractérisée en ce que** cette même unité d'interface reproduit de manière audible les instructions orales actuellement disponibles.

9. Unité d'interface selon l'une des revendications 1 à 8, **caractérisée en ce que** l'unité d'interface est conçue pour enregistrer les réglages souhaités pour chaque utilisateur séparément, et, dans le cas de conflits de réglages des différents utilisateurs, les montrer sur l'unité d'affichage pour permettre de choisir les réglages souhaités.
